# DEMANDE DE BREVET EUROPEEN

(11) **EP 1 717 652 A1**
(43) Date de publication de la demande: **02.11.2006**
(21) Numéro de dépôt: 06113103.3
(22) Date de dépôt: 25.04.2006
(51) Int. Cl.: G05B 19/042, D06F 31/00

(54) **Systeme de gestion de buanderies collectives**

(30) Priorité: 26.04.2005 CH 7452005
(71) Demandeur: Keycom S.A., 1015 Lausanne (CH)
(72) Inventeur: NAJJAR, Mohamed Sami, 1008, Prilly (CH); FARRUGIA, Paul, 1003, Lausanne (CH)
(74) Mandataire: Grosfillier, Philippe

(57) **Abrégé**

Dispositif comprenant une buanderie dotée d'au moins une machine à laver ou d'un sèche-linge caractérisé par le fait qu'il comprend en outre une clé électronique sécurisée qui est dédiée à un utilisateur défini, ladite machine à laver ou ledit sèche-linge comprenant des moyens pour recevoir ladite clé électronique et des moyens pour activer ladite machine à laver ou ledit sèche-linge consécutivement à l'introduction d'une clé électronique valable.

## Description

### Domaine de l'invention

La présente invention se situe dans le domaine de la gestion des buanderies collectives.

### Etat de la technique

Il existe divers types de buanderies collectives, en particulier celles qui sont destinées à des habitants d'un immeuble ou celles qui sont destinées à n'importe quel utilisateur. Ce deuxième type de buanderie est communément nommé salon-lavoir.
Une buanderie collective peut être constituée d'une seule ou de plusieurs machines à laver et/ou d'un ou plusieurs sèche-linges.
Pour utiliser une machine, l'utilisateur doit insérer dans celle-ci un jeton ou une pièce de monnaie.
Le contrôle et la gestion des buanderies est effectué par le passage périodique d'une personne qui, notamment, vide les machines de leurs jetons/pièces de monnaie.

Il est souhaitable de pouvoir améliorer la gestion des buanderies collectives, en évitant notamment le passage régulier d'une personne pour retirer les jetons/pièces de monnaie.
Il existe également un besoin de suivre en permanence le fonctionnement et la fréquence d'utilisation des machines, ceci afin d'assurer un service d'entretien ou de réparation optimal.

### Description de l'invention

La présente invention constitue une amélioration par rapport aux systèmes de gestion des buanderies de l'état de la technique.
Elle concerne un système permettant l'accès des différentes machines de lave-linge et/ou de sèche-linge aux usagers des buanderies collectives par une clé électronique sécurisée et personnalisée.

De préférence, toutes les buanderies sont gérées à distance par un système de télécommunication dont le fonctionnement est connu en soi.

Avantageusement, le système de paiement de l'exploitation des machines à laver le linge et des séchoirs est à prépaiement : la clé utilisateur est chargée automatiquement p.ex. en composant un numéro de téléphone dédié à cet effet, en composant SMS, en autorisant un ordre de prélèvement automatique via un terminal approprié, au moyen d'une carte de crédit en utilisant un site Internet ou encore par un versement postal ou bancaire. En accord avec les propriétaires des buanderies, une facture périodique basée sur un rapport d'exploitation peut même être envisagée.

L'invention vise à aménager et à gérer, selon la formule de concession, les buanderies collectives. Elle permet de résoudre tous les problèmes liés aux lessives et des paiements dans les buanderies collectives grâce à la centralisation de la gestion d'un parc de buanderies.

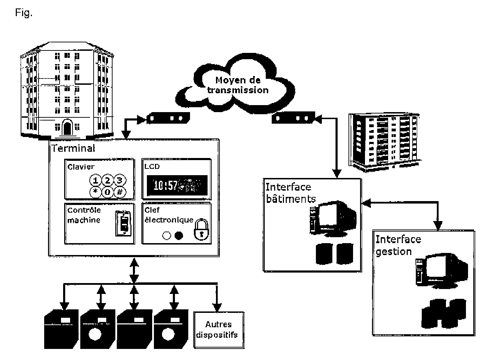

Le système selon l'invention (voir l'unique figure) permet l'accès aux machines des buanderies collectives grâce à une clé électronique sécurisée et personnalisée. Cette clé possède de préférence une mémoire permettant la sauvegarde de par ex. deux ans d'opérations, mémoire utile en cas de contestations des factures.

Les machines à laver le linge et les séchoirs sont connectés à un système d'accès, serrure de la clé électronique, qui enregistre la durée et l'énergie consommée par chaque programme de lessive et/ou séchage choisi par l'utilisateur. Permettant ainsi le contrôle et la gestion de la consommation de l'énergie électrique dans la buanderie ;

Un panneau numérique (display) affiche au consommateur le montant restant de son crédit et toutes les informations concernant ses opérations dans la langue de son choix.

Grâce à un clavier, l'utilisateur peut choisir la machine à laver le linge ou séchoir disponible, effectuer la transaction pour charger clé électronique, rendre possible l'utilisation des machines par d'autres utilisateurs de la buanderie quand il ne s'agit pas de leurs jours de lessive, p.ex. en libérant l'accès lorsqu'il part en vacances. Cette dernière utilisation permet de faire respecter le planning entre les usagers de la buanderie.

Un système de transmission effectue le transfert des données de et vers une plate-forme informatique de gestion centralisée pour permettre l'administration à distance de toutes les buanderies.

Les données transmises sont stockées dans une base de données pour être à la disposition des logiciels et programmes pour les différents traitements comme la mise à jour des données clients, l'activation ou la désactivation des clés, la recharge des crédits sur les clés électroniques, la facturation, la production des rapports d'exploitation et les statistiques de consommations d'énergie.

Le système permet aussi de contrôler et de gérer à distances les alertes des pannes des machines à laver le linge et séchoirs par la détection des pannes et la transmission des incidents vers la centrale informatique de gestion qui informe en temps réel, p.ex. par email ou par SMS, le technicien chargé de la maintenance, permettant ainsi d'anticiper et d'optimiser les interventions de maintenance des machines de lave-linge et des sèche-linges.

Selon un mode de réalisation de l'invention, le système comprend la mise à disposition de produits de proximité. Il s'agit de distributeurs proposant divers produits de lessive et d'autres adoucissants (en divers parfums) dosés selon le facteur de dureté de l'eau spécifique à la localisation géographique de l'immeuble. Le système fournit les différents produits par utilisation de la clé électronique. Cette démarche contribue au respect de l'environnement grâce au bon dosage des produits et à la diminution des déchets ménagers grâce à l'abandon des emballages. Le système selon l'invention gère le niveau de remplissage des produits dans les distributeurs, en effet quand le degré de remplissage atteint certains niveaux, le distributeur de produits de lessive et adoucissants envoie une requête à la plate-forme informatique interrogeant le distributeur pour savoir quel produit il faut remplir, par la suite un message est produit à la personne concernée pour le remplissage du produit dans le distributeur.

Basé sur le même de principe de transmission et de gestion des données, le système intègre aussi d'autres applications comme une alarme de protection contre les incendies, une alarme pour les pannes des ascenseurs, un système anti-intrusion, la mesure du niveau des citernes de mazout pour le chauffage et la transmission des relevés des compteurs d'électricité, gaz et eau chaude.

Il va sans dire que l'invention ne se limite pas aux exemples décrits précédemment. Elle est utilisée de préférence avec une centrale de gestion à distance, mais cette application ne représente qu'une possibilité de réalisation de l'invention parmi d'autres.

De même, le dispositif selon l'invention peut comprendre qu'une seule clé et/ou qu'une seule machine. Mais en général, il comprend plusieurs clés, plusieurs machines, plusieurs buanderies, tous ces éléments communiquant avec une centrale de gestion à distance.

## Revendications

1. Dispositif comprenant une buanderie dotée d'au moins une machine à laver ou d'un sèche-linge **caractérisé par le fait qu'**il comprend en outre une clé électronique sécurisée qui est dédiée à un utilisateur défini, ladite machine à laver ou ledit sèche-linge comprenant des moyens pour recevoir ladite clé électronique et des moyens pour activer ladite machine à laver ou ledit sèche-linge consécutivement à l'introduction d'une clé électronique valable.

2. Dispositif selon la revendication précédente comprenant en outre une centrale de gestion à distance de la buanderie, ladite centrale et ladite machine ou ledit sèche-linge étant adaptés pour communiquer entre eux.

3. Dispositif selon la revendication 1 ou 2 **caractérisé en ce que** la clé électronique comprend des moyens pour la recharger régulièrement, de manière à pouvoir bénéficier d'un crédit d'utilisation.

4. Dispositif selon l'une quelconque des revendications précédentes comprenant en outre un distributeur de produits pour la buanderie tels que produits de lessive ou adoucissants, ledit distributeur étant adapté pour être utilisé avec ladite clé électronique.

5. Dispositif selon l'une quelconque des revendications précédentes comprenant une unité de contrôle dotée de moyens pour recevoir ladite clé électronique et comportant des moyens d'affichage, des moyens pour programmer et/ou recharger le crédit de ladite clé électronique.

6. Dispositif selon l'une quelconque des revendications précédentes comprenant plusieurs clés électroniques, chaque clé étant dédiée à un utilisateur défini.

7. Dispositif selon l'une quelconque des revendications précédentes **caractérisé en ce que** chaque clé électronique comporte une mémoire qui est adaptée pour conserver toutes les données relatives à l'utilisation de la clé pendant une période définie, par exemple d'au moins deux ans.

8. Dispositif selon l'une quelconque des revendications précédentes comprenant plusieurs buanderies, chaque buanderies comprenant plusieurs machines à laver et/ou plusieurs sèche-linges et accessoirement un ou plusieurs distributeurs de produits, tous ces éléments étant mis en communication avec une centrale de gestion à distance.
